# EUROPEAN PATENT APPLICATION

(11) **EP 4 516 649 A1**
(43) Date of publication of application: **05.03.2025**
(21) Application number: 22940127.8
(22) Date of filing: 27.04.2022
(51) Int. Cl.: B62D 137/00, B62D 6/00, B62D 5/04

(54) **INPUT/OUTPUT DEVICE**

(71) Applicant: MITSUBISHI ELECTRIC CORPORATION, Chiyoda-ku Tokyo 100-8310 (JP)
(72) Inventor: TANAKA Kenta, Tokyo 100-8310 (JP); IKEGAME Toru, Tokyo 100-8310 (JP); KEZOBO Isao, Tokyo 100-8310 (JP); HASHIMOTO Akihiko, Tokyo 100-8310 (JP)
(74) Representative: Hoffmann Eitle
(86) International application number: PCT/JP2022/019029
(87) International publication number: WO 2023/209847

(57) **Abstract**

An input/output device is an input/output device connected to a control device controlling a rotary machine provided in an electric power steering device and includes a target-characteristic input unit acquiring a target characteristic of a feedback control performed by the control device, a control-constant calculation unit calculating a control constant of the control device on the basis of the target characteristic, an evaluation-result output unit outputting an evaluation result of a feedback control system to which the control constant is applied, a communication transmission unit transmitting the control constant to the control device, and a write instruction unit instructing the communication transmission unit to transmit the control constant.

## Description

### [Technical Field]

The present disclosure relates to an input/output device.

### [Background Art]

Patent Document 1 discloses an input/output device connected to a control device for controlling a rotary machine provided in an electric power steering device via a communication network. This input/output device calculates a control constant related to an inertia compensation control and a viscosity compensation control performed by the control device on the basis of a mechanical constant of the electric power steering device. In this input/output device, the control constant is uniquely calculated with respect to the mechanical constant of the electric power steering device.

### [Citation List]

### [Patent Document]

[Patent Document 1]
Japanese Patent No. 6129409

### [Summary of Invention]

### [PROBLEM TO BE SOLVED BY THE INVENTION]

Incidentally, in a control device of an electric power steering device, there are cases of applying a control that outputs a result obtained by a steering torque and a speed of the rotary machine being subjected to a phase compensation or being multiplied by a gain as an assist torque. In such a control, since a control characteristic changes according to settings of a phase compensator or a gain, there is a high degree of freedom in designing the control constant. It is difficult to apply the conventional method of calculating the control constant, for example as described in Patent Document 1, to a control device having such a high degree of freedom as described above.

Also, in a control device having a high degree of freedom, there are a large number of control constants set in the control device, and it has been difficult to accurately grasp an influence of a set value of each control constant on a characteristic of the control device. Conventionally, it has been general to actually operate an electric power steering device with a designed control constant set in software of the control device and then verify whether a desired target characteristic is achieved. Therefore, if the desired target characteristic has not been achieved, it has been necessary to repeat processing of adjusting the control constant again and then verifying it through an experiment. Therefore, man-hours required for adjusting the control constant tends to increase.

The present disclosure has been made to solve the above-described problems, and an objective thereof is to provide an input/output device capable of reducing man-hours required for adjusting a control constant.

### [MEANS TO SOLVE THE PROBLEM]

An input/output device according to the present disclosure is an input/output device connected to a control device controlling a rotary machine provided in an electric power steering device and includes a target-characteristic input unit acquiring a target characteristic of a feedback control performed by the control device, a control-constant calculation unit calculating a control constant of the control device on the basis of the target characteristic, an evaluation-result output unit outputting an evaluation result of a feedback control system to which the control constant is applied, a communication transmission unit transmitting the control constant to the control device, and a write instruction unit instructing the communication transmission unit to transmit the control constant.

### [EFFECTS OF THE INVENTION]

According to the present disclosure, it is possible to provide an input/output device capable of reducing man-hours required for adjusting a control constant.

### [Brief Description of Drawings]

FIG. 1 is a diagram showing an input/output device and an electric power steering device according to embodiment 1.
FIG. 2 is a block diagram showing a control device according to embodiment 1.
FIG. 3 is a block diagram showing the input/output device according to embodiment 1.
FIG. 4 is a diagram showing an example of a target characteristic input to a target-characteristic input unit according to embodiment 1.
FIG. 5 is a diagram showing another example of the target characteristic input to the target-characteristic input unit according to embodiment 1.
FIG. 6 is a diagram showing an example of an evaluation result output by an evaluation-result output unit according to embodiment 1.
FIG. 7 is a diagram showing another example of the evaluation result output by the evaluation-result output unit according to embodiment 1.
FIG. 8 is a block diagram showing an input/output device according to embodiment 2.
FIG. 9 is a diagram showing a power feeding unit according to embodiment 2.
FIG. 10 is a diagram showing a power feeding unit according to a modified example of embodiment 2.

### [Description of Embodiments]

### Embodiment 1.

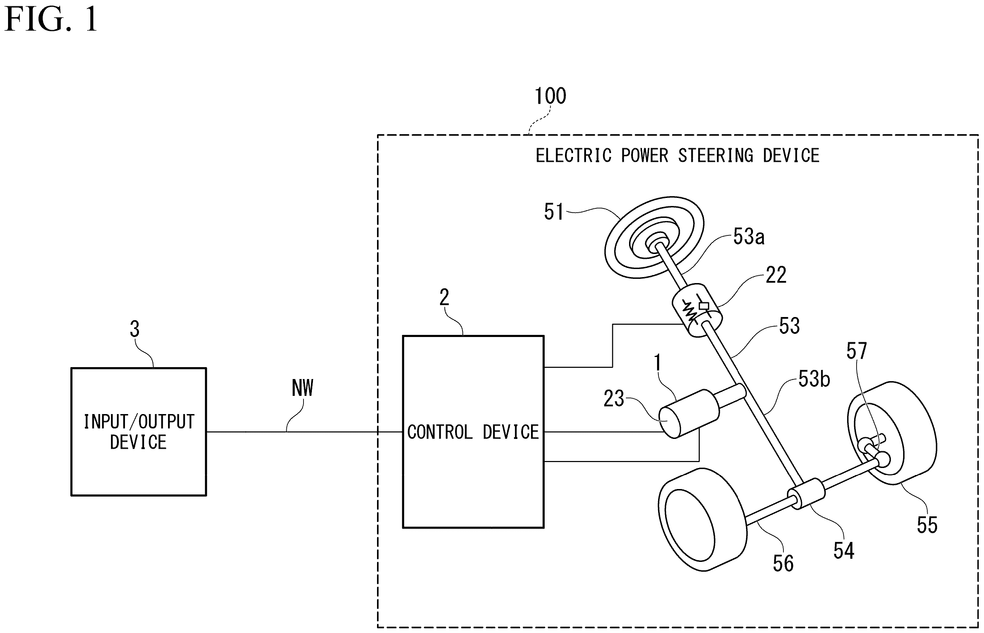

FIG. 1 is a diagram showing an input/output device 3A and an electric power steering device 100 according to embodiment 1. As shown in FIG. 1, the electric power steering device 100 according to the present embodiment includes a steering wheel 51, a steering shaft 53, a rack and pinion gear 54, a pair of wheels 55, a tie rod 56, a rotary machine 1, a control device 2, a torque detector 22, and a rotation detector 23. The electric power steering device 100 is mounted on a vehicle. The input/output device 3A is connected to the control device 2 via a communication network NW when it performs transmission of a control constant (details will be described later).

The communication network NW according to the present embodiment is a network mounted on the vehicle and connecting electrical components installed in the vehicle. The electrical components installed in the vehicle perform transmission and reception of data via the communication network NW. The communication network NW is also referred to as an in-vehicle communication network. In the present embodiment, the control device 2 and the input/output device 3A are connected using the above-described communication network NW. As the communication network NW, for example, a controller area network (CAN) (registered trademark), FlexRay (registered trademark), Ethernet (registered trademark), or the like may be used. According to types of the communication network NW used, a cable for the communication network NW may be wired in the vehicle.

A steering torque is applied to the steering wheel 51 by a steering wheel operation or the like by a driver (not shown). The steering shaft 53 has an input shaft 53a connected to the steering wheel 51, and an output shaft 53b connected to the rack and pinion gear 54. The input shaft 53a and the output shaft 53b are connected to each other by a torsion bar (not shown). The torsion bar is disposed inside the torque detector 22 and penetrates the torque detector 22 in an axial direction. Note that, in the present specification, the steering wheel 51, the steering shaft 53, and the torsion bar may be collectively referred to as a "steering".

The steering torque applied to the steering wheel 51 is transmitted to a rack (not shown) in the rack and pinion gear 54 via the torsion bar in the torque detector 22, the steering shaft 53, and the rack and pinion gear 54. The rack and the wheels 55 are connected via the tie rod 56 and a knuckle arm 57. Therefore, when the steering torque due to the steering wheel operation is transmitted to the rack, the tie rod 56 pushes the knuckle arm 57 on one wheel 55, and the tie rod 56 pulls the knuckle arm 57 on the other wheel 55. Thereby, a steering angle is applied to the wheels 55, and the wheels 55 are steered.

A voltage is applied to the rotary machine 1 by the control device 2. The rotary machine 1 generates a torque according to the applied voltage. The torque (output torque) generated from the rotary machine 1 is transmitted to the steering shaft 53. The output torque of the rotary machine 1 functions as a steering assist force and reduces the steering torque that the driver has to apply during steering. The rotary machine 1 may have, for example, an AC motor such as a permanent magnet synchronous motor or an induction motor, a DC motor, or the like.

The torque detector 22 detects the steering torque applied to the steering wheel 51 by the driver. More specifically, when the steering torque is applied, a torsion substantially proportional to the steering torque occurs in the torsion bar. The torque detector 22 detects a direction and an angle of the torsion of the torsion bar. The torque detector 22 converts the detected torsion angle into a steering torque signal Ts and outputs it to the control device 2 (power feeding unit 25).

The rotation detector 23 is attached to a rotating shaft of the rotary machine 1. The rotation detector 23 detects a rotation speed of the rotating shaft. The rotation detector 23 converts the detected rotation speed into a rotation speed signal ωm and outputs it to the control device 2 (power feeding unit 25). Note that, in the present specification, the control device 2, the torque detector 22, and the rotation detector 23 may be collectively referred to as a "feedback control system".

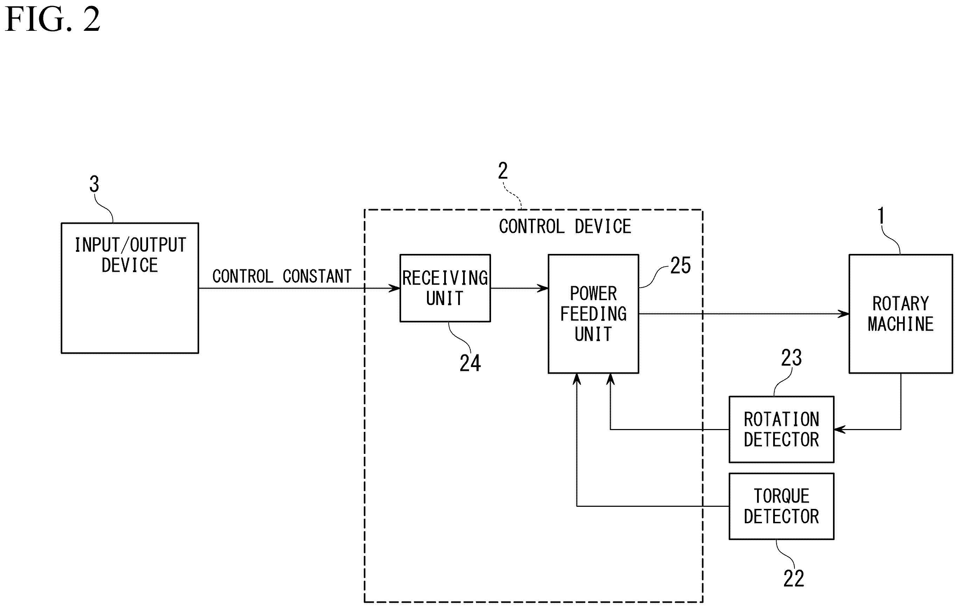

FIG. 2 is a block diagram showing an internal configuration of the control device 2 according to the present embodiment. As shown in FIG. 2, the control device 2 includes a receiving unit 24 and the power feeding unit 25. The receiving unit 24 receives the control constant output from the input/output device 3A (communication transmission unit 7).

The power feeding unit 25 generates a voltage applied to the rotary machine 1 on the basis of the received control constant, the steering torque signal Ts output from the torque detector 22, and the rotation speed signal ωm output from the rotation detector 23. More specifically, the power feeding unit 25 according to the present embodiment determines a current command corresponding to an output torque output by the rotary machine 1 on the basis of the control constant, the steering torque signal Ts, and the rotation speed signal ωm. The power feeding unit 25 applies a voltage to the rotary machine 1 on the basis of the current command in order to cause the rotary machine 1 to generate the output torque. That is, a feedback control based on information detected by each of the detectors 22 and 23 is performed in the power feeding unit 25. The power feeding unit 25 has controllers (a torque controller, a speed controller, and the like) that perform the feedback control. The control constant is, for example, coefficients of various types included in a transfer function related to the feedback control.

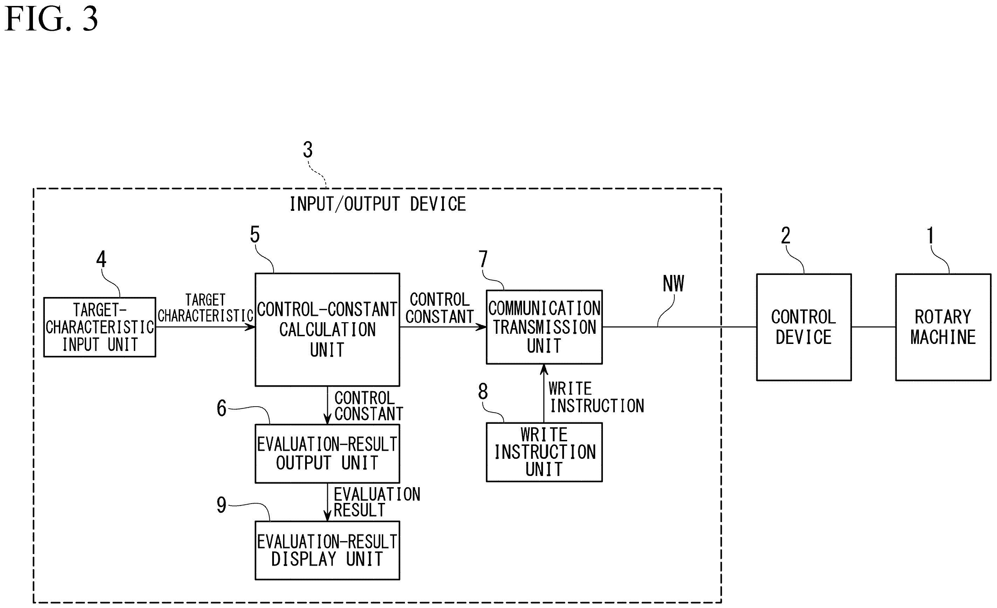

FIG. 3 is a block diagram showing an internal configuration of the input/output device 3A according to the present embodiment. As shown in FIG. 3, the input/output device 3A includes a target-characteristic input unit 4, a control-constant calculation unit 5, an evaluation-result output unit 6, the communication transmission unit 7, a write instruction unit 8, and an evaluation-result display unit 9. The target-characteristic input unit 4, the write instruction unit 8, and the evaluation-result display unit 9 function as a user interface for an operator adjusting the control constant.

As hardware constituting the input/output device 3A, a communication terminal such as, for example, a tablet computer, a notebook personal computer or the like may be used. In a case of a tablet computer, it is possible to cause a touch panel display thereof to assume both functions of an input unit (the target-characteristic input unit 4, the write instruction unit 8) and a display unit (the evaluation-result display unit 9). In a case of a notebook personal computer, it is possible to cause a keyboard and a mouse thereof to assume a function of the input unit (the target-characteristic input unit 4, the write instruction unit 8), and cause a display to assume a function of the display unit (the evaluation-result display unit 9). Note that, hardware assuming functions of the target-characteristic input unit 4, the write instruction unit 8, and the evaluation-result display unit 9 may be changed as appropriate. The hardware assuming the functions of the target-characteristic input unit 4, the write instruction unit 8, and the evaluation-result display unit 9 may be independent of each other, or may be used concurrently as appropriate.

The input/output device 3A performs processing of various types including a calculation of the control constant on the basis of an operator's input acquired by the target-characteristic input unit 4 and the write instruction unit 8. Also, the input/output device 3A outputs the calculated control constant from the evaluation-result output unit 6. The input/output device 3A transmits the calculated control constant to the control device 2 (the receiving unit 24) via the communication transmission unit 7 connected to the communication network NW. In the present disclosure, the operator adjusting the control constant sets a desired target characteristic by operating the target-characteristic input unit 4. The control-constant calculation unit 5 calculates a control constant that realizes the target characteristic. The operator ascertains an output of the evaluation-result output unit 6 and determines whether the calculated control constant is appropriate. If it is determined that the control constant is appropriate, the operator transmits the calculated control constant to the control device 2 by operating the write instruction unit 8. Hereinafter, each unit of the input/output device 3A will be described in detail.

First, the target-characteristic input unit 4 will be described. The target-characteristic input unit 4 acquires a target characteristic representing a performance target of the control device 2. Acquisition of the target characteristic is performed, for example, by the operator operating the target-characteristic input unit 4 to set the desired target characteristic. That is, the operator sets a characteristic (target characteristic) required for the feedback control performed by the control device 2 (the power feeding unit 25) by operating the target-characteristic input unit 4. Types of characteristics (target characteristics) set in the target-characteristic input unit 4 include, for example, a transmission characteristic, noise or detection errors contained in each of the detector 22 and 23, ability to suppress disturbance vibration, and stability of control. Note that, the transmission characteristic refers to a characteristic representing an amount of the output torque (steering assist force) with respect to the output of each of the detector 22 and 23 (the steering torque signal Ts and the rotation speed signal ωm). The disturbance vibration refers to vibration that is transmitted from a road surface to the driver via the electric power steering device 100 and is unnecessary vibration for steering. Also, the stability of control refers to, more specifically, an index representing a degree of instability of the control caused by increasing responsiveness of the steering assist force with respect to the driver's steering. The target-characteristic input unit 4 outputs the acquired target characteristic to the control-constant calculation unit 5.

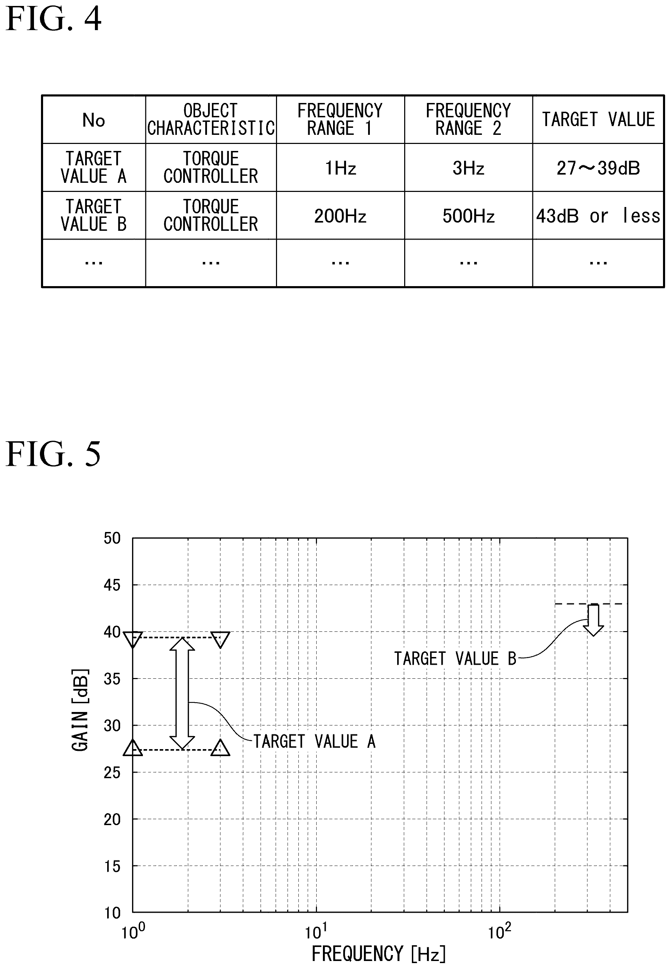

FIG. 4 is a setting example of the target-characteristic input unit 4. FIG. 4 shows an example of setting a target value (target characteristic) for a transmission characteristic of the torque controller. The torque controller is a controller that generates the steering assist force with respect to the steering torque detected by the torque detector 22. In the example of FIG. 4, a target value in a predetermined frequency band specified from a frequency range 1 to a frequency range 2 is set, but a configuration in which the target value is set only for a specific frequency may be employed. Also, as described above as an example of the target characteristic, a configuration in which a target value related to the ability to suppress disturbance vibration and the stability of control is set as the target value may be employed.

Note that, FIG. 4 shows an example in which the target value is set in a table format, but setting of the target-characteristic input unit 4 is not limited thereto. For example, as shown in Figure 5, a configuration in which a target characteristic for which a target value is set is shown in a frequency region, and the operator sets the target value by manipulating a point, a cursor, or the like displayed on the diagram may be employed.

Next, the control-constant calculation unit 5 will be described. The control-constant calculation unit 5 calculates a control constant of the control device 2 on the basis of the target characteristic output by the target-characteristic input unit 4. If the power feeding unit 25 included in the control device 2 is configured with a controller having a high degree of freedom, there are a large number of control constants to be set (calculated). Therefore, the control-constant calculation unit 5 according to the present embodiment calculates a control constant that achieves the desired target characteristic by an optimization calculation. As the optimization calculation method, a method such as a steepest descent method or a genetic algorithm may be used. Particularly, when a genetic algorithm such as a particle swarm optimization (PSO) method is used, it is possible to obtain a global optimal solution. The control-constant calculation unit 5 outputs the calculated control constant to the evaluation-result output unit 6 and the communication transmission unit 7.

Next, the evaluation-result output unit 6 and the evaluation-result display unit 9 will be described. The evaluation-result output unit 6 generates an evaluation result of the feedback control system to which the control constant output by the control-constant calculation unit 5 is applied. The evaluation-result output unit 6 outputs the generated evaluation result to the evaluation-result display unit 9. The evaluation-result display unit 9 displays the evaluation result output by the evaluation-result output unit 6. The operator ascertains whether a desired control constant has been obtained on the basis of the evaluation result displayed by the evaluation-result display unit 9.

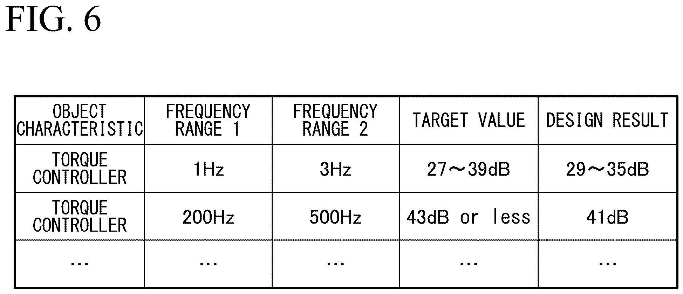

FIG. 6 is a diagram showing an example of the evaluation results. In FIG. 6, as the evaluation results, target values (target characteristics) and design results (design values) are output as numerical data in a table format. In the table shown in FIG. 6, a characteristic of a case in which the control constant calculated by the control-constant calculation unit 5 is applied to each target value set by the target-characteristic input unit 4 is displayed as the design result. In the example of FIG. 6, the design results all satisfy the target values, and it is possible for the operator to ascertain that the calculated control constants are appropriate.

If the design result does not satisfy the target characteristic, for example, the following two factors are conceivable. A first factor is a case in which the result calculated by the optimization calculation is a locally optimal solution (local solution). A second factor is a case in which the set target characteristic is difficult to achieve. If the target characteristic is not satisfied due to the first factor, there is a possibility that it is possible to obtain the control constant satisfying the desired target characteristic by performing the optimization calculation by the control-constant calculation unit 5 again. On the other hand, if the target characteristic is not satisfied due to the second factor, it is preferable that the operator review the target characteristic set in the target-characteristic input unit 4 and then calculate the control constant again by the control-constant calculation unit 5.

Note that, FIG. 6 shows an example in which the design result with respect to the target value (target characteristic) is output as the evaluation result, but an example of the evaluation result is not limited thereto. For example, the control constant calculated by the control-constant calculation unit 5 may be included in the evaluation result output by the evaluation-result output unit 6. This configuration is particularly suitable when the control constant is set as a fixed-point number in software of the control device 2. The fixed-point number representation has a characteristic that a degree of freedom in numerical values that is representable is lower than that of the floating-point number representation. When a configuration in which the control constant calculated by the control-constant calculation unit 5 is output as the evaluation result is employed, it is possible for the operator to ascertain in advance whether there is any problem in implementing the calculated control constant into the software.

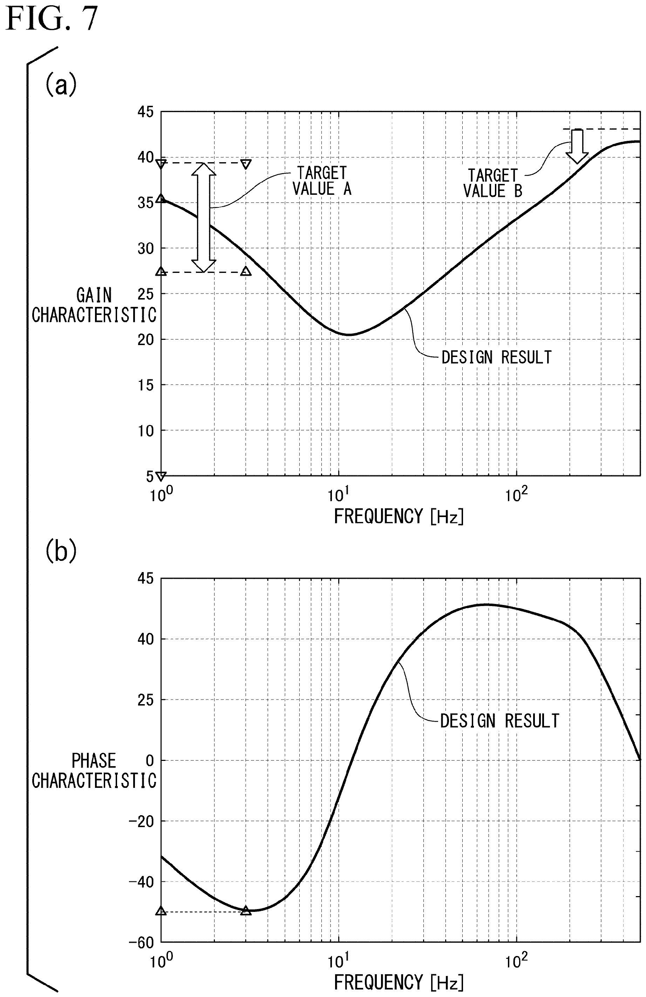

Also, the evaluation results are shown as numerical data in a table format in the example of FIG. 6, but a format of the evaluation results is not limited thereto. For example, as shown in FIG. 7, the evaluation result may be output in a graphical format. More specifically, a configuration in which various characteristics (design results) when the control constants calculated by the control-constant calculation unit 5 are applied are displayed as a diagram in a frequency region, and target characteristics (target values) are also written on the diagram may be employed. In this case, it is possible for the operator not only to ascertain whether the control constants that is able to achieve the target characteristics have been calculated, but also to grasp characteristics of frequency bands that have not been set as target characteristics. Therefore, it is possible for the operator to grasp a validity of the control constants more accurately. Also, the evaluation-result output unit 6 may simultaneously output representations with numerical data in a table format and a graphical format in a frequency region as the evaluation result.

Also, the evaluation result has been output to the evaluation-result display unit 9 in the above-described example, but the evaluation-result output unit 6 may output the evaluation result to the outside of the input/output device 3A. In this case, the input/output device 3A may not include the evaluation-result display unit 9. However, the configuration in which the evaluation-result display unit 9 included in the input/output device 3A displays the evaluation result is suitable because it is possible for the operator efficiently grasp the evaluation result of the control constant.

Next, the communication transmission unit 7 and the write instruction unit 8 will be described. If the operator determines that there is no problem with the evaluation result output by the evaluation-result output unit 6, the operator transmits the control constant from the input/output device 3A to the control device 2 by operating the write instruction unit 8. More specifically, the write instruction unit 8 instructs the communication transmission unit 7 to transmit the control constant on the basis of the operator's operation (write instruction). When the communication transmission unit 7 receives the transmission instruction (write instruction) from the write instruction unit 8, the communication transmission unit 7 transmits the control constant output by the control-constant calculation unit 5 to the control device 2 via the communication network NW. If the input/output device 3A is configured by a tablet computer, a button may be provided on a touch panel display thereof, and the operator may operate the button to perform the write instruction.

Note that, the functions of the units 4 to 9 included in the input/output device 3A shown in FIG. 3 may be realized by a central processing unit (CPU) executing a program. Alternatively, it is also possible to realize the functions of the units 4 to 9 using hardware (circuit unit including a circuitry) such as a large scale integration (LSI), an application specific integrated circuit (ASIC), a field-programmable gate array (FPGA), and a graphics processing unit (GPU). Alternatively, it is also possible to realize the functions of the units 4 to 9 by software and hardware in cooperation.

As described above, the input/output device 3A according to the present embodiment is the input/output device 3A connected to the control device 2 that controls the rotary machine 1 provided in the electric power steering device 100, and includes the target-characteristic input unit acquiring a target characteristic of a feedback control performed by the control device 2, the control-constant calculation unit 5 calculating a control constant of the control device 2 on the basis of the target characteristic, the evaluation-result output unit 6 outputting an evaluation result of a feedback control system to which the control constant is applied, the communication transmission unit 7 transmitting the control constant to the control device 2, and the write instruction unit 8 instructing the communication transmission unit 7 to transmit the control constant.

According to this configuration, it is possible to send the control constant to the control device after the operator adjusting the control constant ascertains the evaluation result based on the calculated control constant and determines whether it is possible to achieve the target characteristic. Therefore, it is possible to reduce man-hours related to adjusting the control constant compared to a case of, for example, actually operating the electric power steering device with a designed control constant set in software of the control device and verifying whether a desired target characteristic is achieved.

Also, the evaluation-result output unit 6 outputs the evaluation result in at least one of numerical data and a graphical format. With this configuration, it is possible for the operator to easily grasp the evaluation result of the control constant. Therefore, it is possible to further reduce man-hours required for adjusting the control constant.

Also, the input/output device 3A according to the present embodiment further includes the evaluation-result display unit 9 displaying the evaluation result. With this configuration, it is possible for the operator to efficiently grasp the evaluation result of the control constant. Therefore, it is possible to reduce man-hours required for adjusting the control constant more effectively.

### Embodiment 2.

In embodiment 1 described above, a configuration in which the control constant of the feedback control performed by the power feeding unit 25 is transmitted from the input/output device 3A to the control device 2 has been employed. In contrast, the present embodiment is different from embodiment 1 in that an input/output device 3B transmits a controller configuration parameter representing a configuration of a control device 2, in addition to the control constant described above, to the control device 2.

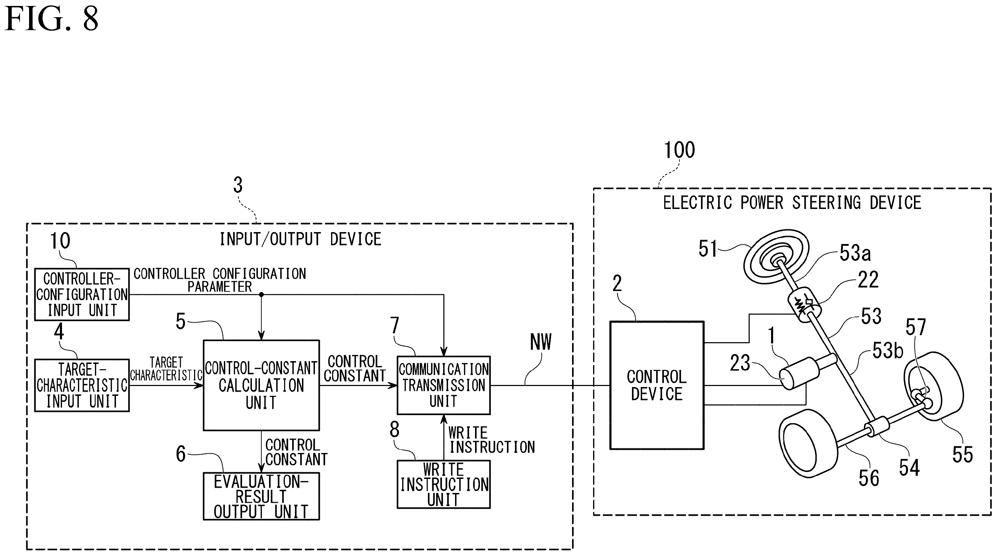

FIG. 8 is a diagram showing the input/output device 3B and an electric power steering device 100 according to embodiment 2. The input/output device 3B according to embodiment 2 further includes a controller-configuration input unit 10 in addition to the components included in the input/output device 3A according to embodiment 1.

The controller-configuration input unit 10 acquires the controller configuration parameter representing a configuration of the control device 2. The acquisition of the controller configuration parameter is performed, for example, by an operator operating the controller-configuration input unit 10. If hardware constituting the input/output device 3B is a tablet computer, it is possible to cause a touch panel display thereof to assume a function of the controller-configuration input unit 10. If hardware constituting the input/output device 3B is a notebook personal computer, it is possible to cause a keyboard and a mouse thereof to assume the function of the controller-configuration input unit 10. The controller-configuration input unit 10 outputs the acquired controller configuration parameter to a control-constant calculation unit 5.

In the present embodiment, the control-constant calculation unit 5 calculates a control constant of the control device 2 on the basis of a target characteristic output by a target-characteristic input unit 4 and the controller configuration parameter output by the controller-configuration input unit 10. The control-constant calculation unit 5 outputs the controller configuration parameter and the calculated control constant to a communication transmission unit 7. The communication transmission unit 7 transmits the control constant and the controller configuration parameter to the control device 2 (receiving unit 24) on the basis of an instruction from a write instruction unit 8.

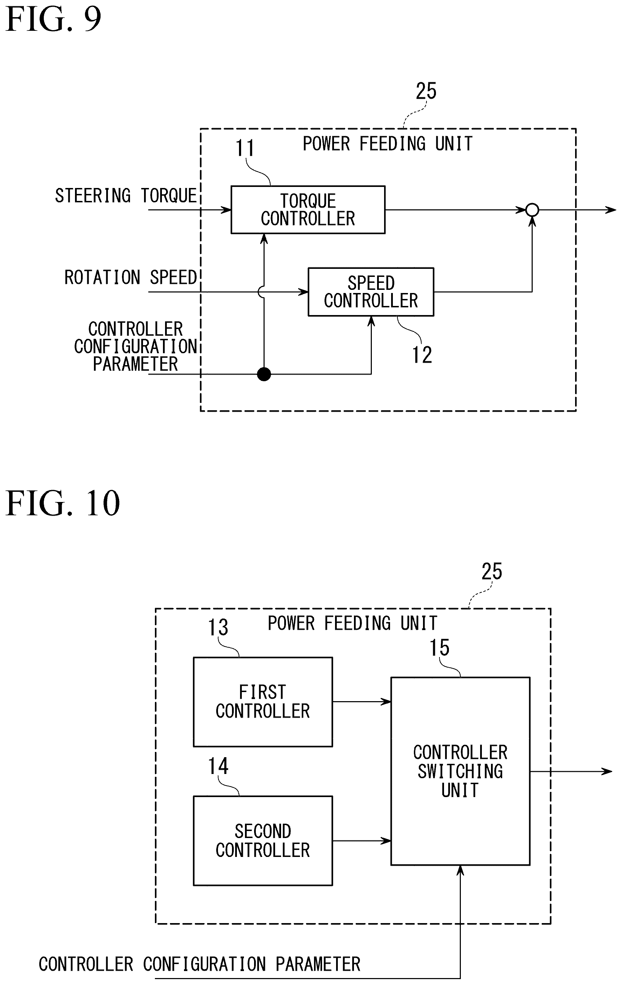

A power feeding unit 25 according to the present embodiment determines a current command corresponding to an output torque of a rotary machine 1 according to the control constant, the controller configuration parameter, a steering torque signal Ts output by a torque detector 22, and a rotation speed signal ωm output by a rotation detector 23. FIG. 9 is an example of a controller that determines the current command according to the steering torque signal Ts, the rotation speed signal ωm, and the like. In the example shown in FIG. 9, the power feeding unit 25 includes a torque controller 11 and a speed controller 12. In the example shown in FIG. 9, the steering torque signal Ts and the controller configuration parameter are input to the torque controller 11, and the rotation speed signal ωm and the controller configuration parameter are input to the speed controller 12. Here, the controller configuration parameter in the example of FIG. 9 is the order of each of the controllers 11 and 12. A result of adding an output of the torque controller 11 and an output of the speed controller 12 is an output (current command) of the power feeding unit 25.

For example, if each of the controllers 11 and 12 has a transfer function having a second-order denominator polynomial and a second-order numerator polynomial, there are six control constants for each of the controllers 11 and 12, and a characteristic of the transfer function is determined by a combination of the control constants. Therefore, in the example of the power feeding unit 25 shown in FIG. 9, a combination achieving a desired target characteristic is searched for by adjusting a total of twelve control constants. Generally, since the number of control constants that is able to be adjusted increases as the order of the controller becomes higher, it is possible for the controller to realize more complex characteristics. On the other hand, since an amount of information to be processed increases as the order of the controller becomes higher, a computational load on software increases. That is, it is possible to realize a controller achieving the desired target characteristic by preparing a high-order controller, but from a viewpoint of a computational load on the software, it is desirable that the order of the controller be small.

In view of the above, in the present embodiment, the order of the controller, which is the controller configuration parameter, is used for calculation of the control constant by the control-constant calculation unit 5, and it is possible to set the order of the controller by the operator using the controller-configuration input unit 10. If the operator determines that the target characteristic set in the target-characteristic input unit 4 cannot be achieved by the control constant calculated by the control-constant calculation unit 5, it is possible for the operator to increase the order of the controller which is the controller configuration parameter and to search for the control constant again. Thereby, it is possible to determine a control constant achieving the desired target characteristic while reducing a computational load on the software.

Note that, the controller configuration parameter may not have to be the order of the controller. For example, the power feeding unit 25 may include a plurality of controllers with different control laws, and the controller configuration parameter may be a parameter for switching between the plurality of controllers. The power feeding unit 25 shown in the example of FIG. 10 includes a first controller 13 and a second controller 14 having control laws different from each other. Also, the power feeding unit 25 includes a controller switching unit 15. The controller switching unit 15 switches the controller used by the power feeding unit 25 between the first controller 13 and the second controller 14 on the basis of the controller configuration parameter output from the input/output device 3B.

The first controller 13 is, for example, a linear controller in which an output signal with respect to an input signal has a linear characteristic. It is possible to realize a linear controller with a relatively simple configuration. On the other hand, a linear controller has a trade-off relationship such as, for example, adjusting to suppress disturbance vibration in a low frequency region amplifies detector noise generated in a high frequency region, and there is a limit to the characteristic that is able to be achieved. The second controller 14 is, for example, a nonlinear controller in which an output signal with respect to an input signal has a nonlinear characteristic. A nonlinear controller has a possibility that it may achieve a superior characteristic compared to a linear controller. For example, as described above, if detector noise in the high frequency region becomes a problem in achieving a desired characteristic in the low frequency region, there is a possibility that it is possible to achieve the desired characteristic in the entire frequency region by applying a filter or the like with a nonlinear characteristic. On the other hand, the nonlinear controller requires more complicated processing than the linear controller, resulting in an increased computational load.

Therefore, it is preferable that the operator sets the controller configuration parameter such that if a desired target characteristic is able to be achieved with a linear controller, a linear controller with a small computational load is applied, and if the desired target characteristic cannot be achieved with a linear controller, it is switched to a nonlinear controller. Thereby, it is possible to determine a control constant achieving the desired target characteristic while reducing a computational load on the software. Note that, the power feeding unit 25 may include three or more controllers with different control laws, and the three or more controllers may be switched according to the controller configuration parameter.

As described above, the input/output device 3B according to the present embodiment further includes the controller-configuration input unit 10 that acquires a controller configuration parameter representing a configuration of the control device 2, in which the control-constant calculation unit 5 calculates the control constant on the basis of the target characteristic and the controller configuration parameter, the communication transmission unit 7 transmits the control constant and the controller configuration parameter to the control device 2, and the write instruction unit 8 instructs the communication transmission unit 7 to transmit the control constant and the controller configuration parameter. According to this configuration, when the operator appropriately set the controller configuration parameter, it is possible to determine a control constant achieving the desired target characteristic while reducing a computational load on the software.

Although embodiments 1 and 2 have been described above, the present disclosure is not limited to the above-described embodiments, and may be freely modified within a range not departing from the spirit of the present disclosure. Also, embodiments 1 and 2 described above may be combined as appropriate.

Note that, each configuration of the input/output devices 3A and 3B described above has a computer system therein. Then, a program for realizing functions of each configuration of the input/output devices 3A and 3B described above may be recorded on a computer-readable recording medium, and the processing in each configuration of the input/output devices 3A and 3B described above may be performed by causing the computer system to read and execute the program recorded on the recording medium. Here, "causing the computer system to read and execute the program recorded on the recording medium" includes installing the program on the computer system. The "computer system" described herein includes an OS and hardware such as peripheral devices.

Also, the "computer system" may include a plurality of computer devices connected via a network including the Internet or a communication line such as a WAN, LAN, dedicated line or the like. Also, the "computer-readable recording medium" refers to a portable medium such as a flexible disk, a magneto-optical disk, a ROM, a CD-ROM or the like, and a storage device such as a hard disk built in a computer system or the like. In this way, the recording medium in which the program is stored may be a non-transitory recording medium such as a CD-ROM or the like.

The recording medium also includes a recording medium provided internally or externally that is accessible from a distribution server for distributing the program. Note that, a configuration in which the program is divided into a plurality of parts, and the divided programs are each downloaded at a different timing to be combined by each configuration of the input/output devices 3A and 3B may be used, and distribution servers distributing the divided programs may be different. Further, the "computer-readable recording medium" includes one that holds a program for a certain period of time such as a volatile memory (RAM) inside a computer system that serves as a server or client when the program is transmitted via a network. Also, the above-described program may be a program for realizing some of the above-described functions. Further, the program may be a so-called differential file (differential program) that is able to implement the above-described functions in combination with a program already recorded in the computer system.

### [Reference Signs List]

1 Rotary machine
2 Control device
3A, 3B Input/output device
4 Target-characteristic input unit
5 Control-constant calculation unit
6 Evaluation-result output unit
7 Communication transmission unit
8 Write instruction unit
9 Evaluation-result display unit
10 Controller-configuration input unit
100 Electric power steering device

## Claims

1. An input/output device, which is connected to a control device controlling a rotary machine provided in an electric power steering device, comprising
a target-characteristic input unit acquiring a target characteristic of a feedback control performed by the control device;
a control-constant calculation unit calculating a control constant of the control device on the basis of the target characteristic;
an evaluation-result output unit outputting an evaluation result of a feedback control system to which the control constant is applied;
a communication transmission unit transmitting the control constant to the control device; and
a write instruction unit instructing the communication transmission unit to transmit the control constant.

2. The input/output device according to claim 1, further comprising a controller-configuration input unit which acquires a controller configuration parameter representing a configuration of the control device, wherein
the control-constant calculation unit calculates the control constant on the basis of the target characteristic and the controller configuration parameter,
the communication transmission unit transmits the control constant and the controller configuration parameter to the control device, and
the write instruction unit instructs the control device to transmit the control constant and the controller configuration parameter.

3. The input/output device according to claim 1 or 2, wherein the evaluation-result output unit outputs the evaluation result in at least one of numerical data and a graphical format.

4. The input/output device according to any one of claims 1 to 3, further comprising an evaluation-result display unit displaying the evaluation result.
